# EUROPEAN PATENT APPLICATION

(11) **EP 2 088 494 A1**
(43) Date of publication of application: **12.08.2009**
(21) Application number: 07850278.8
(22) Date of filing: 07.12.2007
(51) Int. Cl.: G06F 1/16, H04M 1/02

(54) **PORTABLE TERMINAL**

(30) Priority: 08.12.2006 JP 2006331751
(71) Applicant: Panasonic Corporation, Kadoma-shi Osaka 571-8501 (JP)
(72) Inventor: SOUDA, Kazuki Panasonic Corporation IPROC, Osaka-shi, Osaka 540-6207 (JP)
(74) Representative: Grünecker, Kinkeldey, Stockmair & Schwanhäusser Anwaltssozietät
(86) International application number: PCT/JP2007/073700
(87) International publication number: WO 2008/069317

(57) **Abstract**

A mobile terminal whose rigidity is ensured and that can be slimmed down is provided as the mobile terminal placed in an expansion state as opposed sides of a first housing and a second housing are moved in parallel from a mobile state in which the first housing and the second housing are stacked.

A first housing 20 including a first circuit board 50 and a second housing 30 including a second circuit board 60 are joined by a joint section 40 slidably, and a mobile state in which the first housing 20 and the second housing 30 are stacked on each other or an expansion state in which the first housing 20 and the second housing 30 are placed at different levels can be selected. The joint section 40 is made up of a rail 41 provided on one of the back side of the first housing 20 and the front side of the second housing 30 and a guide 44 provided on the other of the back side of the first housing 20 and the front side of the second housing 30 and engaging the rail 41, and a part of the joint section 40 (namely, part of the slide rail 41 and the guide 44) supports a part of the battery 33. Thus, the rigidity can be improved regardless of the mobile state or the expansion state, and the mobile terminal can be slimmed down.

## Description

### TECHNICAL FIELD

This invention relates to a mobile terminal and in particular to a mobile terminal for enabling the user to select a mobile state in which a first housing and a second housing are stacked so that the back side of the first housing and the front side of the second housing are opposed to each other or an expansion state in which the back side of the first housing and the front side of the second housing relatively move in parallel and the first and second housings are placed at different levels.

### BACKGROUND ART

A mobile terminal in patent document 1 has a display section (LCD) and a suboperation section provided on the front side of an upper housing and has a main operation section provided on the front side of a lower housing. The main operation section includes a large number of input keys and function keys.
The mobile terminal has the upper housing and the lower housing joined relatively slidably through a joint section and a mobile state in which the upper housing and the lower housing are stacked on each other so that the back side of the upper housing and the front side of the lower housing are opposed to each other or an expansion state in which the back side of the upper housing and the front side of the lower housing relatively move in parallel and the upper housing and the lower housing are placed at different levels can be selected by sliding both the housings (refer to patent document 1).
In such a mobile terminal, in the expansion state, the suboperation section of the upper housing and the main operation section of the lower housing are adjacent to each other and are operated in conjunction with each other.

In the slide-type mobile terminal, in the joint section for joining the upper housing and the lower housing slidably, one of the upper housing and the lower housing is provided with a rail and the other is provided with a guide and the upper housing and the lower housing are joined relatively slidably as the rail and the guide slide.
Patent document 1: Japanese Patent Laid-Open No. 2005-244679

### DISCLOSURE OF THE INVENTION

### PROBLEMS TO BE SOLVED BY THE INVENTION

By the way, in a mobile terminal, hitherto, it has been a common practice to provide a battery storage section shaped like a bag in a battery cover to house a battery of a power supply in an upper housing of a first housing or a lower housing of a second housing.
However, since the battery storage section of a space is provided in the case of the upper housing or the lower housing, degradation of rigidity is incurred and the housing becomes thick and therefore the slimming down of the mobile terminal is limited.

The invention is embodied to satisfy the demand described above and it is an object of the invention to provide a mobile terminal whose rigidity is ensured and that can be slimmed down as the mobile terminal placed in an expansion state as opposed sides of a first housing and a second housing are moved in parallel from a mobile state in which the first housing and the second housing are stacked.

### MEANS FOR SOLVING THE PROBLEMS

A mobile terminal of the invention is characterized by the fact that it includes a first housing; a second housing; a joint section for allowing the first housing to slide relative to the second housing; and a battery being housed in a space of the second housing with at least a part of the battery being supported by the joint section.

A mobile terminal of the invention is characterized by the fact that it includes a first housing; a second housing; a joint section for allowing the first housing to slide relative to the second housing; and a hard disk drive being housed in a space of the second housing with at least a part of the hard disk drive being supported by the joint section.

In the invention, a part of the battery housed in the space of the second housing or a part of the hard disk drive is supported by the joint section, so that the rigidity of the mobile terminal can be improved and the mobile terminal can be slimmed down.

The mobile terminal of the invention is characterized by the fact that a part of the joint section is housed in at least one of the first housing and the second housing.

In the invention, a part of the joint section of a rail, a guide, etc., for example, is housed in the first housing or the second housing, so that the mobile terminal can be slimmed down.

Further, the mobile terminal of the invention is characterized by the fact that the second housing has an operation section and that a part of the joint section is placed between the operation section and the battery or the hard disk drive so as to be sandwiched therebetween.

In the invention, a part of the joint section is placed between the operation section of the second housing and the battery or the hard disk drive so as to be sandwiched therebetween and thus the operation section is strongly supported and the operability of the operation section is improved.

### Advantages of the Invention

The invention can provide the mobile terminal having the advantage that the rigidity of the mobile terminal can be improved and the whole can be slimmed down because the battery or the hard disk drive is supported by a part of the joint section.

### Brief Description of the Drawings

FIG. 1 (A) is a perspective view of seeing a mobile state of a mobile terminal of an embodiment according to the invention from the front side and FIG. 1 (B) is a perspective view of seeing the mobile state of the mobile terminal from the back side.
FIG. 2 is a perspective view in an expansion state.
FIG. 3 is an exploded perspective view of seeing an upper housing and a lower housing from the lower housing side.
FIG. 4 is a sectional view taken on line IV-IV in FIG. 1 (A).

### Description of Reference Numerals

- 10: Mobile terminal
- 20: Upper housing (first housing)
- 21: Upper cover
- 22: Upper case
- 30: Lower housing (second housing)
- 31: Lower cover
- 32: Lower case
- 33: Battery
- 33b: Battery storage section (space)
- 35: Operation section
- 40: Joint section
- 41: Slide rail
- 44: Slide base
- 50: Upper circuit board
- 52: Connection wiring
- 60: Lower circuit board

### BEST MODE FOR CARRYING OUT THE INVENTION

A mobile terminal of an embodiment of the invention will be discussed with the accompanying drawings.

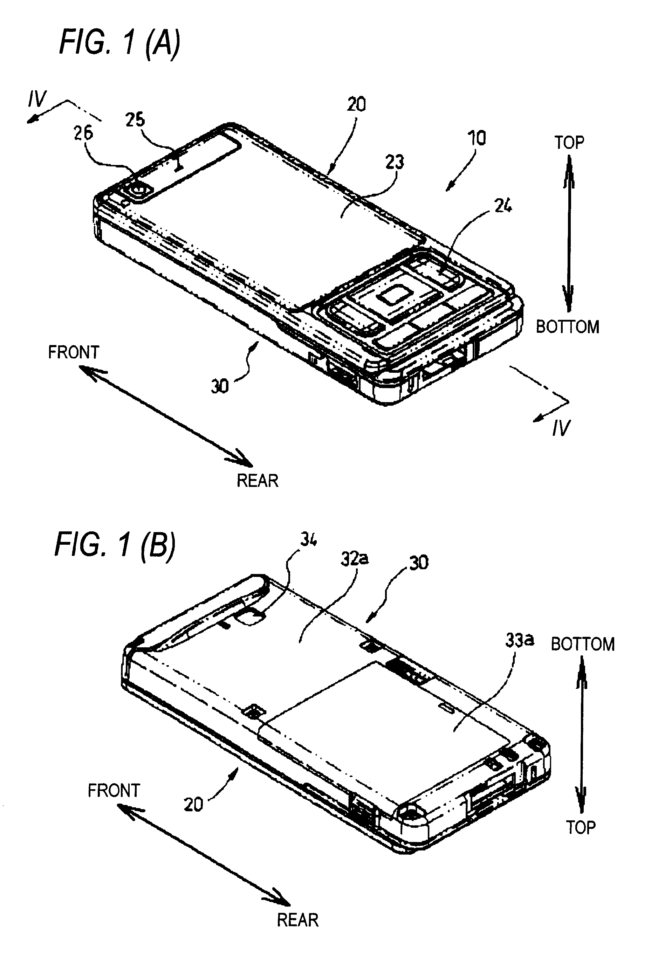

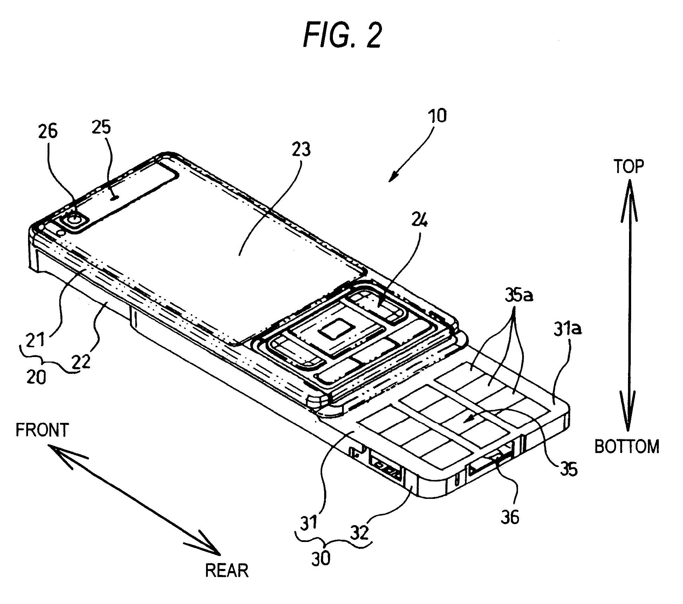

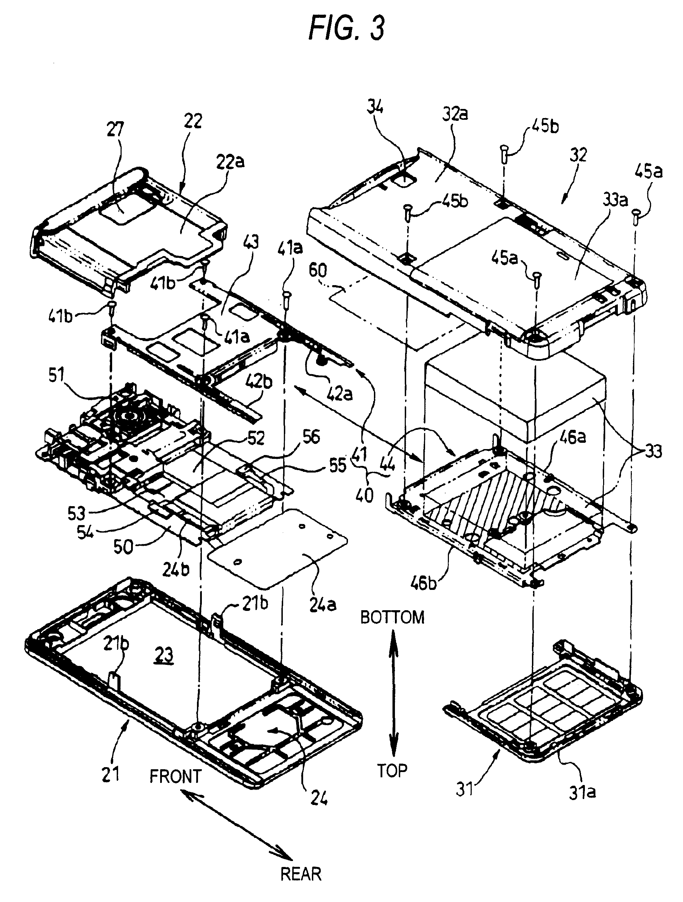

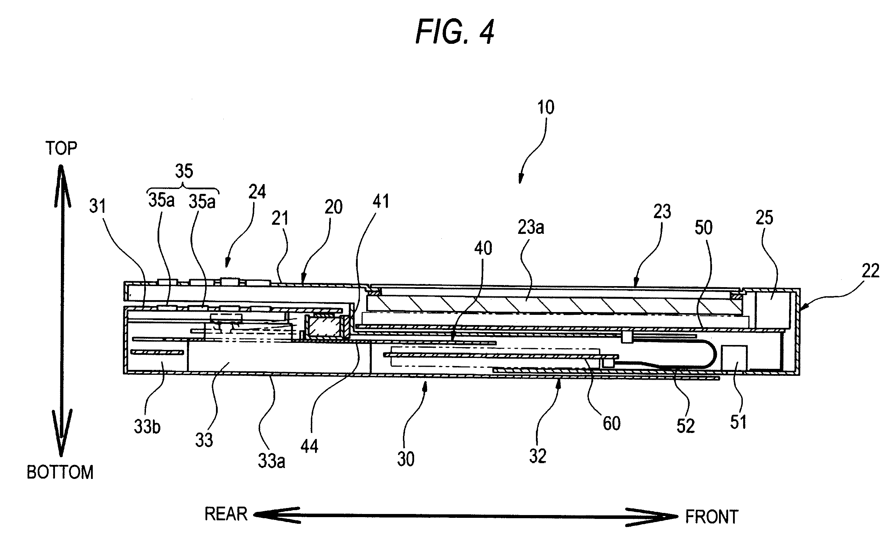

FIG. 1 (A) is a perspective view of seeing a mobile state of the mobile terminal of the embodiment according to the invention from the front side, FIG. 1 (B) is a perspective view of seeing the mobile state of the mobile terminal from the back side, FIG. 2 is a perspective view in an expansion state, FIG. 3 is an exploded perspective view of seeing an upper housing and a lower housing from the lower housing side, and FIG. 4 is a sectional view taken on line IV-IV in FIG. 1 (A).

As shown in FIGs. 1 (A) and (B) and FIG. 2, a mobile terminal 10 has an upper housing 20 of a first housing shaped like a rectangular box, a lower housing 30 of a second housing shaped like a rectangular box, and a joint section 40 (see FIG. 3) for joining the upper housing 20 and the lower housing 30 slidably.
Therefore, the mobile terminal 10 enables the user to select a mobile state in which the upper housing 20 and the lower housing 30 are stacked on each other (see FIGS. 1(A) and 1(B)) or an expansion state in which the upper housing 20 and the lower housing 30 are placed at different levels (see FIG. 2) by sliding the upper housing 20 and the lower housing 30 relatively by the joint section 40.

The upper housing 20 has an upper cover 21 and an upper case 22, and a display section 23 of an LCD 23a, a navigation operation section 24, a receiver 25, a user's own photographing camera 26, and the like are provided on a top face 21a of the upper cover 21. A camera window 27 for a mate photographing camera 51 is provided on a lower face 22a of the upper case 22 (see FIG. 3).

The lower housing 30 has a lower case 32 shaped like a rectangular box and a lower cover 31 for covering the vicinity of one end part of the lower case 32. A battery cover 33a, a camera window 34 for the mate photographing camera 51, and the like are provided on a lower face 32a of the lower case 32. A main operation section 35 having a plurality of keys 35a, a microphone 36, and the like are provided on a top face 31a of the lower cover 31. When the mobile terminal 10 is in the mobile state in which the upper housing 20 and the lower housing 30 completely overlap, the main operation section 35 provided on the lower housing 30 is completely hidden as shown in FIG. 1(A), and appears and can be operated by sliding the upper housing 20 and the lower housing 30 to place the mobile terminal 10 in the expansion state as shown in FIG 2.

An upper circuit board 50 is contained in an internal space formed by the upper cover 21 and the upper case 22 of the upper housing 20 as shown in FIG. 3. The upper circuit board 50 is provided with connection wiring 52 made of FPC (flexible printed wiring) connected to a lower circuit board 60 contained in the lower housing 30. Further, the upper circuit board 50 is provided with an LCD wiring board 53 connected to the mate photographing camera 51 and LCD (not shown in the figure), a navigation key connector 54 to which a wiring board 24b from a key sheet 24a of the navigation operation section 24 is connected, a backlight connector 56 to which a backlight wiring board 55 is connected, etc. The upper circuit board 50 is held on the upper cover 21 by a holding claw 21 b provided on the upper cover 21 and is fastened to the upper cover 21 together with a slide rail 41 with screws 41a together with the slide rail 41 described later.

As shown in FIGs. 3 and 4, the metal slide rail 41 of a rail forming a part of the joint section 40 for joining the upper housing 20 and the lower housing 30 slidably is provided on the bottom side of the upper circuit board 50 in the upper housing 20 (see the arrows in FIGs. 3 and 4). The slide rail 41 is fastened to the upper cover 21 through the upper circuit board 50 with the screws 41a and also fastened to the upper circuit board 50 with screws 41b.

The slide rail 41 is made up of a pair of left and right rail parts 42a and 42b and a wide cover part 43 for joining both the rail parts 42a and 42b and is shaped like a letter H as a whole, as shown in FIG. 3.
The cover part 43 of the slide rail 41 is shaped like a convex form in the center so as to be able to house the connection wiring 52, etc., in the inner part (concave part).
Accordingly, while the strength is maintained, the mobile terminal 10 can be slimmed down.

A slide base 44 of a guide forming a part of the joint section 40 as a part of the joint section 40 is attached between the lower cover 31 and the lower case 32 in the lower housing 30, as shown in FIG. 3.
That is, the slide base 44 is fixed with screws 45a between the lower cover 31 and the lower case 32 and is also fixed to the lower case 32 with screws 45b.
Both left and right end parts of the slide base 44 are bent upward (see the arrows in FIGs. 3 and 4) and are further bent inward to form guide parts 45a and 45b with tips shaped like a letter L.

Therefore, as shown in FIG. 3, the guide parts 45a and 45b provided on both the left and right sides of the slide base 44 engage so as to embrace the rail parts 42a and 42b of the slide rail 41, whereby the slide rail 41 can slide from the front to the rear or from the rear to the front (see the arrow in FIG. 3) along the slide base 44 in a state in which the slide rail 41 is held on the slide base 44. The upper case 22 can move along the inside of the lower case 32.

As shown in FIGs. 3 and 4, a battery storage section (space) 33b for storing a battery 33 is provided between the lower case 32 and the slide base 44 of the lower housing 30 and the battery cover 33a provided in the lower case 32 is removed, whereby the battery 33 can be attached and detached. Therefore, a part of the joint section 40 is placed between the operation section 35 and the battery 33 of the lower housing 30 so as to be sandwiched therebetween. At least a part of the battery 33 (hatched portion in FIG. 3, black portion in FIG. 4) is supported by the slide base 44 of a part of the joint section 40.
The battery storage section 33b is provided at a position overlapping the operation section 35 in the lower housing 30. Therefore, the operation section 35 is strongly supported by the battery 33 and the operability when the key 35a of the operation section 35 is pressed is improved and the rigidity of the mobile terminal 10 can also be enhanced.

According to the mobile terminal 10 described above, a part of the joint section 40 (namely, part of the slide rail 41 and the slide base 44) supports a part of the battery 33, so that the rigidity of the mobile terminal 10 can be improved regardless of the mobile state or the expansion state, and the mobile terminal 10 can be slimmed down.

The slide rail 41 of a part of the joint section 40 is housed between the upper case 22 and the upper cover 21 and the slide base 44 of a part of the joint section 40 is housed between the lower case 32 and the lower cover 31, so that the mobile terminal 10 can be slimmed down.

In the embodiment described above, the battery 33 supported in the joint section 40 is illustrated, but a mode in which the joint section 40 supports a hard disk drive, etc., of a microdrive, etc., for example, is also contained in the invention.

This application is based on Japanese Patent Application (No. 2006-331751) filed on December 8, 2006, which is incorporated herein by reference.

### Industrial Applicability

As described above, the invention is useful as the mobile terminal having the advantage that the rigidity of the mobile terminal can be improved regardless of the mobile state or the expansion state and the whole can be slimmed down, the mobile terminal for enabling the user to select the mobile state in which the first housing and the second housing are stacked so that the back side of the first housing and the front side of the second housing are opposed to each other or the expansion state in which the back side of the first housing and the front side of the second housing relatively move in parallel and the first and second housings are placed at different levels or the like.

## Claims

1. A mobile terminal comprising:
a first housing;
a second housing;
a joint section for allowing said first housing to slide relative to said second housing; and
a battery being housed in a space of said second housing with at least a part of said battery being supported by said joint section.

2. A mobile terminal comprising:
a first housing;
a second housing;
a joint section for allowing said first housing to slide relative to said second housing; and
a hard disk drive being housed in a space of said second housing with at least a part of said hard disk drive being supported by said joint section.

3. The mobile terminal as claimed in claim 1 or 2, wherein a part of said joint section is housed in at least one of said first housing and said second housing.

4. The mobile terminal as claimed in claim 1 or 2, wherein said second housing has an operation section, and
a part of said joint section is placed between the operation section and said battery or said hard disk drive so as to be sandwiched therebetween.
